# FASCICULE DE BREVET EUROPEEN

(11) **EP 2 730 790 B1**
(45) Date de publication et mention de la délivrance du brevet: **01.02.2017**
(21) Numéro de dépôt: 13192437.5
(22) Date de dépôt: 12.11.2013
(51) Int. Cl.: F16B 43/00, F16B 19/05

(54) **Dispositif pour fixation étanche**
Vorrichtung zum dichten Befestigen
Device for sealed attachment

(30) Priorité: 12.11.2012 FR 1260756
(43) Date de publication de la demande: 14.05.2014
(73) Titulaire: LISI Aerospace, 75012 Paris (FR)
(72) Inventeur: Verdier, Florent, 92500 Rueil Malmaison (FR); Regnard, Benoit, 78640 Saint Germain de la Grange (FR)
(74) Mandataire: Ipside

(56) Documents cités:
- WO-A1-2008/156578
- DE-A1- 3 221 655
- JP-A- H0 224 107
- JP-A- 2008 064 309
- JP-A- 2008 267 136
- US-A- 2 666 354
- US-A- 2 927 495
- US-A- 3 584 531
- US-A1- 2012 074 257
- Toray fine chemicals Co. Ltd.: "Thiokol LP", , 16 août 2010 (2010-08-16), XP002705675, Extrait de l'Internet: URL:http://www.torayfinechemicals.com/engl ish/products/pdf/pol_chi.pdf [extrait le 2013-07-24]

## Description

La présente invention se rapporte à un dispositif de fixation de type vis/écrou. Plus précisément, l'invention se rapporte à un dispositif de fixation étanche. L'invention s'applique particulièrement au domaine aéronautique.

L'emploi de dispositifs de fixation de type vis/écrou ou tige/bague de sertissage (voir par exemple le document WO 2008/156578 A) est très courante dans l'industrie aéronautique, notamment pour solidariser l'un à l'autre deux éléments de structure. Il est fréquent qu'une étanchéité aux liquides et/ou aux gaz soit requise au niveau de telles fixations, par exemple dans les réservoirs de carburant, ou bien pour éviter la présence d'humidité propice à la corrosion dans les éléments assemblés.

Afin de réaliser une telle étanchéité, il est connu d'appliquer un mastic entre la fixation mâle - de type vis ou tige - et l'alésage dans lequel elle prend place. Après installation du dispositif de fixation femelle adéquat - de type écrou ou bague de sertissage -, le mastic durcit par polymérisation de ses composants, ce qui assure l'étanchéité de l'assemblage fixation / structure, ainsi que sa protection contre la corrosion.

Toutefois, l'application du mastic au niveau d'un alésage est une opération délicate, qui augmente le temps et le coût de l'installation des fixations.

Par ailleurs, lors du montage de la fixation femelle sur la fixation mâle, par exemple le vissage de l'écrou sur la vis ou le sertissage de la bague sur la tige, il convient d'éviter des frottements importants entre la fixation femelle et un panneau de structure. De tels frottements risqueraient d'endommager le panneau, qui est aujourd'hui fréquemment constitué d'un matériau composite.

Une solution connue consiste à munir l'écrou d'une rondelle captive, comme décrit par exemple dans le document US4986712. Dans ce document, la rondelle est retenue par des griffes sur l'embase de l'écrou. La rondelle est ainsi reliée à l'écrou, ce dernier demeurant libre en rotation par rapport à la rondelle.

Lorsqu'un ensemble écrou/rondelle tel que décrit dans le document US4986712 est utilisé dans une fixation pour panneaux de structure, le vissage de l'écrou sur une vis amène la mise en contact de la rondelle avec l'un des panneaux. Afin de serrer l'écrou jusqu'au couple de serrage souhaité, il est alors indispensable que la force de friction soit plus faible entre l'écrou et la rondelle qu'entre la rondelle et le panneau. Ainsi, la rondelle reste fixe par rapport au panneau tandis que l'écrou continue à tourner par rapport à la rondelle, pour parvenir au couple de serrage souhaité.

Dans le document US4986712, la surface de l'écrou au contact de la rondelle est recouverte d'un revêtement à base de cadmium, lui-même recouvert d'une cire. Cette cire assure une lubrification entre l'écrou et la rondelle.

L'invention a pour objet de proposer un ensemble comprenant une rondelle, celle-ci assurant à la fois la lubrification de l'interface rondelle/fixation femelle et l'étanchéité de l'assemblage final, tout en permettant une installation aisée.

Plus précisément, un aspect de l'invention se rapporte à une rondelle pour fixation femelle de type écrou ou bague de sertissage, ladite rondelle comprenant une base annulaire et une jupe sensiblement cylindrique s'étendant à la périphérie externe de la base annulaire, ladite base annulaire étant au moins partiellement revêtue d'une couche de composition visqueuse apte à former un revêtement étanche aux liquides par polymérisation.

Lors du montage sur une fixation mâle d'un ensemble formé par une telle rondelle et une fixation femelle, la couche de composition visqueuse est à même de lubrifier l'interface rondelle/fixation femelle. Par ailleurs, la composition visqueuse sera étalée par le déplacement de la fixation femelle, ce qui conduira à la formation d'un joint étanche après polymérisation.

La composition visqueuse peut être un mastic d'étanchéité connu de l'art antérieur, notamment un mastic à base de polysulfure liquide mélangé à un réactif donneur d'oxygène.

Un autre aspect de l'invention se rapporte à un ensemble comprenant une rondelle telle que décrite ci-dessus et une fixation femelle sur laquelle est montée ladite rondelle, la fixation femelle étant libre en rotation selon l'axe de la jupe par rapport à la rondelle.

Selon un mode de réalisation de l'invention, la fixation femelle est assemblée à la rondelle par adhérence avec la couche de composition visqueuse. Il est ainsi possible de manipuler l'ensemble fixation femelle/rondelle sans que ces éléments ne se désolidarisent.

Selon une alternative, la jupe de la rondelle est munie de moyens d'assemblage par emboîtement élastique avec la fixation femelle, lesdits moyens autorisant une rotation de la fixation femelle par rapport à la rondelle. Il est ainsi possible de clipser la rondelle sur une fixation femelle préalablement choisie, avant de procéder à son assemblage avec une fixation mâle telle qu'une vis ou une tige de sertissage.

Un autre aspect de l'invention se rapporte à un procédé de montage étanche d'un système de fixation, ledit système comprenant :
- une rondelle telle que décrite ci-dessus,
- une fixation femelle, apte à être assemblée libre en rotation axiale sur la rondelle,
- une fixation mâle munie d'une extrémité apte à coopérer avec la fixation femelle,
ledit procédé comprenant les étapes suivantes :
- insertion de la fixation mâle dans un alésage d'éléments de structure à fixer ;
- pose de la rondelle sur la fixation femelle, la couche de composition visqueuse étant positionnée entre une face proximale plane de la fixation femelle et la base annulaire de la rondelle ;
- installation de l'ensemble fixation femelle/rondelle sur l'extrémité de la fixation mâle, jusqu'à l'entrée en contact de la rondelle avec l'un des éléments de structure à fixer, de sorte à bloquer la rotation axiale de ladite rondelle par rapport audit élément de structure ou à protéger l'élément de structure des efforts de déformation imprimés à la fixation femelle ;
- poursuite de l'installation de la fixation femelle, son déplacement par rapport à la rondelle conduisant au fluage de la composition visqueuse vers la fixation mâle, de sorte à combler des interstices formés entre la fixation mâle et la fixation femelle et/ou entre la fixation mâle et l'alésage ;
- après installation complète de la fixation femelle, durcissement de la composition visqueuse par polymérisation.

Le durcissement de la composition visqueuse permet d'étanchéifier l'assemblage, ainsi que d'assurer sa protection contre la corrosion. La présence de composition visqueuse sur la rondelle dispense l'opérateur d'opérations délicates, comme par exemple l'application de mastic dans l'alésage ou autour du filetage de la vis.

L'invention sera mieux comprise à la lecture de la description qui suit et à l'examen des figures qui l'accompagnent. Celles-ci sont présentées à titre indicatif et nullement limitatif de l'invention. Les figures montrent :
- Figure 1A : vue en coupe d'un ensemble écrou/rondelle selon un mode de réalisation de l'invention,
- Figure 1B : vue en coupe d'un ensemble écrou/rondelle selon un autre mode de réalisation de l'invention,
- Figure 1C : vue en coupe d'un ensemble bague/rondelle selon un mode de réalisation de l'invention,
- Figure 2 : vue en coupe d'un système de fixation de type vis / écrou en cours de montage, selon un mode de réalisation de l'invention,
- Figure 3 : vue en coupe d'un système de fixation de type tige / bague en cours de montage, selon un autre mode de réalisation de l'invention.

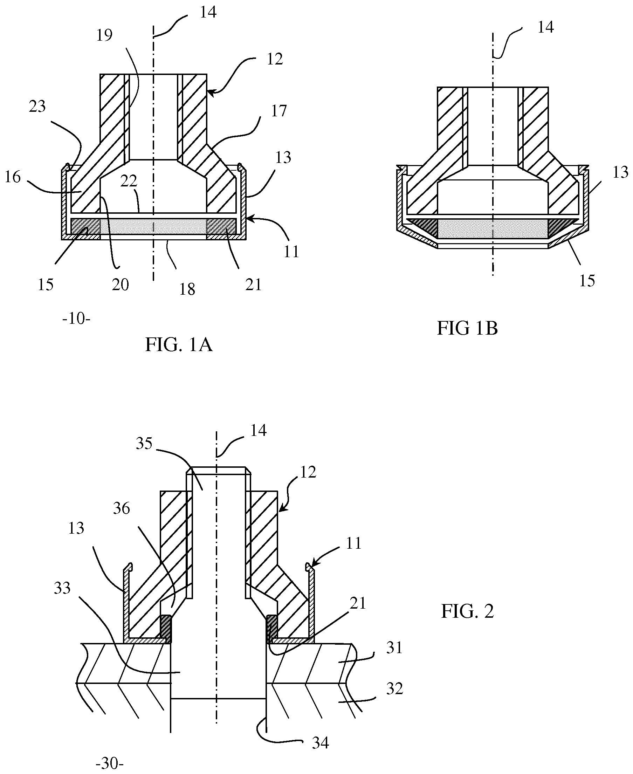

La figure 1A montre une vue en coupe d'un ensemble selon un mode de réalisation de l'invention. L'ensemble 10 comporte une rondelle 11 assemblée à un écrou 12 de fixation.

La rondelle 11 comprend une base annulaire 15 et une jupe 13 sensiblement cylindrique de révolution, disposée selon un axe 14 à la périphérie externe de la base annulaire 15.

La jupe 13 et la base annulaire 15 forment une cavité dans laquelle se loge une embase 16 de l'écrou 12. Ladite embase 16 est de forme sensiblement cylindrique de révolution selon l'axe 14. L'embase 16 est prolongée axialement par une partie 17 sensiblement tronconique, dont le diamètre décroît à mesure que l'on s'éloigne de l'embase 16 selon l'axe 14.

La base annulaire 15 présente un orifice circulaire 18 disposé selon l'axe 14. De même, l'écrou 12 est traversé axialement par un alésage taraudé 19. Au niveau de l'embase 16, l'alésage taraudé 19 est prolongé axialement par un chambrage 20, de diamètre supérieur audit alésage.

La base annulaire 15 est revêtue d'une couche 21 d'une composition visqueuse, de type mastic d'étanchéité. Le mastic est apte à former un joint étanche aux liquides après polymérisation.

Préférentiellement, le mastic comprend un polysulfure liquide et un réactif apte à libérer de l'oxygène, par exemple l'oxyde de manganèse (MnO₂). Ce type de mastic est utilisé de manière courante dans le domaine de l'aéronautique, notamment pour étanchéifier les réservoirs de carburant.

La structure générale d'un monomère de polysulfure est de formule :

HS-(C₂H₄-O-CH₂-O- C₂H₄-S-S)ₙ- C₂H₄-O-CH₂-O- C₂H₄-SH

n étant un nombre entier, généralement compris entre 5 et 50, dont dépend principalement la viscosité du polymère.

L'oxyde de manganèse est un agent de polymérisation qui fournit de l'oxygène réagissant avec un groupement thiol terminal d'un brin monomère, ce qui conduit à la formation d'un pont disulfure entre deux brins. Le mastic est alors solidifié en un revêtement étanche. Selon la formulation de mastic utilisée, la réaction est complète au bout d'une durée comprise entre 20 minutes et 24 heures à une température de 20°C environ. Par exemple, les mastics connus sous les noms commerciaux « PR1776 » ou « PR1762 » sont utilisables dans le cadre de l'invention.

Le tableau 1 ci-dessous indique un exemple de composition de mastic utilisable dans le cadre de l'invention. Ce mastic comprend une base et un agent de polymérisation, qui doivent être mélangés pour que le durcissement ait lieu :

**Tableau 1**

| Composants | Pourcentage massique |
|---|---|
| - Base : | |
| Carbonate de calcium | 26,15 |
| Dioxyde de titane | 3,10 |
| Polysulfure liquide | 58,50 |
| Diluant volatile | 2,25 |
| - Agent de polymérisation : | |
| Dioxyde de manganèse | 5,53 |
| Huile | 3,95 |
| Diluant | 0,51 |

Afin de permettre l'assemblage de l'ensemble 10 avec une vis pour former un assemblage étanche, il convient de bloquer la réaction entre le polysulfure et l'oxyde de manganèse avant ledit assemblage avec une vis.

Selon un mode de réalisation, l'ensemble 10 comprend une couche 21 de mastic dans lequel le polysulfure est mélangé à l'oxyde de manganèse. Il s'agit par exemple du mastic issu du mélange entre la base et l'agent de polymérisation décrits dans le tableau 1. Il est alors possible de maintenir l'ensemble 10 à basse température, jusqu'au montage de la fixation, afin de bloquer la réaction de polymérisation.

Selon un autre mode de réalisation, dans la couche 21 de mastic, l'agent de polymérisation tel que l'oxyde de manganèse est contenu dans des micro-capsules, par exemple en céramique. Ainsi, l'agent de polymérisation est isolé du polysulfure jusqu'au montage de la fixation, comme décrit plus bas.

La couche 21 étant visqueuse, elle adhère à une surface 22 proximale de l'embase 16 de l'écrou, de sorte à maintenir la rondelle 11 sur l'écrou 12.

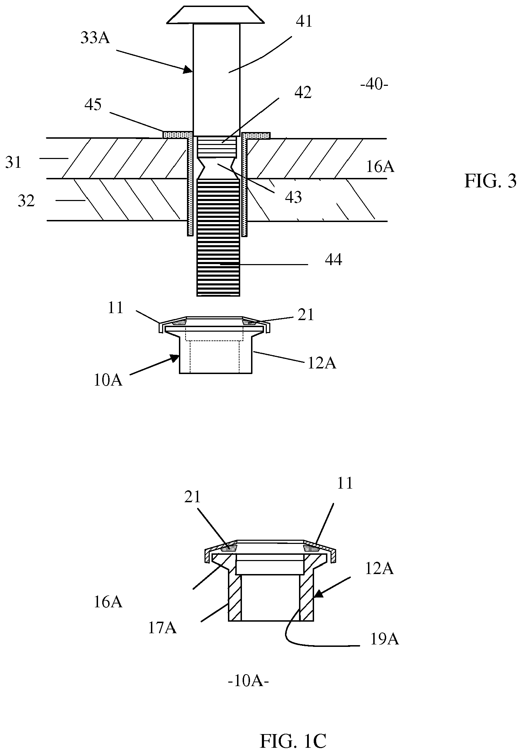

Par ailleurs, dans l'exemple de la figure 1, la rondelle 11 comporte des moyens de clipsage sur l'écrou 12. Plus précisément, une hauteur axiale de la jupe 13 selon l'axe 14 est supérieure à une hauteur axiale de l'embase 16 ajoutée à une hauteur axiale de la couche 21. Une surface interne de la jupe 13 porte des reliefs 23, de type picots, qui permettent un clipsage de la rondelle 11 sur l'embase 16 de l'écrou 12. L'écrou 12 reste libre en rotation par rapport à la rondelle 11 selon l'axe 14.

Dans l'exemple de la figure 1A, la base annulaire 15 est plane et forme avec la jupe un angle de 90°. Selon une variante de réalisation représentée en figure 1B, cette base annulaire 15 peut avoir une forme de tronc de cône disposé selon l'axe 14, le diamètre du cône rétrécissant à mesure que l'on s'éloigne de la jupe. La base annulaire 15 forme alors avec la jupe 13 un angle supérieur à 90°. De préférence, ledit angle est compris entre 90° et 120°. Pour que le mastic flue prioritairement vers le centre de la base annulaire de la rondelle, la rondelle est conçue de sorte que le diamètre de sa base annulaire soit très légèrement supérieur au diamètre extérieur de l'embase de l'écrou.

La figure 1C montre une vue en coupe d'un ensemble 10A selon un autre mode de réalisation de l'invention. L'ensemble 10A comporte une rondelle 11 sertie sur le pourtour d'une bague 12A de sertissage. La rondelle est en tout point de vue identique à celle de la figure 1B, et comporte de la même manière une couche 21 de mastic sur sa base annulaire. Dans cet ensemble, la bague de sertissage 12A est du type connu comprenant une collerette 16A, une portion tubulaire 17A lisse et un perçage intérieur 19A lisse. Ce type de bague est notamment utilisé avec des tiges montées en interférence dans des panneaux de matériaux composites.

La figure 2 représente un système de fixation en cours de montage, selon un mode de réalisation de l'invention. Le système 30 de fixation est destiné à solidariser de manière étanche des éléments (31, 32) de structure, par exemple des panneaux d'avion en matériau composite.

Le système 30 de fixation comprend un ensemble 10 tel que représenté à la figure 1A, avec notamment une rondelle 11 et un écrou 12.

Le système 30 comprend en outre une vis 33 qui prend place dans un alésage 34 ménagé dans les panneaux (31, 32). Le procédé de montage du système 30, décrit ci-après, a pour objectif de réaliser une étanchéité entre le système 30 et l'alésage 34.

Après insertion de la vis 33 dans l'alésage 34, une extrémité 35 filetée de la vis est engagée avec l'alésage taraudé 19 de l'ensemble 10, formé de la rondelle 11, de l'écrou 12 et de la couche 21 de mastic.

A ce stade du procédé de montage, la couche 21 est sous forme d'une composition visqueuse de type mastic frais. Comme évoqué ci-dessus à l'appui de la figure 1A, il peut s'agir d'une composition à base de polysulfure dans lequel de l'oxyde de manganèse est réparti sous forme micro-encapsulée.

De manière alternative, l'ensemble 10 peut avoir été conservé à basse température après dépôt, sur la rondelle 11, d'un mélange de polysulfure au contact d'un réactif tel que l'oxyde de manganèse.

Selon une autre alternative, le mastic formant la couche 21 est préparé et déposé sur la rondelle 11 juste avant l'assemblage avec l'écrou 12 et l'engagement dudit écrou sur la vis 33.

L'écrou 12 de l'ensemble 10 est vissé sur le filetage de la vis 33 de manière à amener la rondelle 11 au contact d'une surface d'un élément 31 de fixation.

A ce stade, la présence de la couche 21 visqueuse induit une force de friction plus faible entre la rondelle 11 et la surface 22 proximale de l'écrou qu'entre ladite rondelle et l'élément 31. Ainsi, la rondelle 11 reste fixe par rapport à l'élément 31 tandis que le vissage de l'écrou se poursuit.

L'écrou 12 se rapproche alors de la rondelle 11 selon l'axe 14, ce qui induit un fluage de la couche 21 visqueuse. En particulier, le mastic est déplacé vers l'axe 14. Un tel déplacement vers l'axe est notamment favorisé par une forme tronconique de la base annulaire 15, formant avec la jupe 13 un angle supérieur à 90°. En effet, l'embase de l'écrou contacte d'abord le pourtour périphérique de la base annulaire, ce qui chasse le mastic vers le centre de la base annulaire. La poursuite du vissage de l'écrou force la base annulaire à s'aplanir contre l'élément de structure tout en continuant à guider le mastic vers le centre de la base annulaire.

Le mastic de la couche 21 va donc se loger dans des interstices 36 formés entre l'écrou 12 et la vis 33 et/ou entre la vis 33 et l'alésage 34. Selon les dimensions du système 30, le volume de la couche 21 est avantageusement choisi de manière à combler suffisamment les interstices 36, pour obtenir une étanchéité de la fixation.

Par ailleurs, dans le cas où le mastic de la couche 21 comporte un réactif sous forme micro-encapsulée, le frottement entre l'écrou 12 et la rondelle 11 casse les micro-capsules, libérant le réactif.

Dans le cas où la base annulaire 15 est tronconique, la pression entre l'écrou 12 et l'élément 31 conduit à la déformation de ladite surface. Le vissage complet de l'écrou favorise l'aplanissement de cette base annulaire 15, pour obtenir la configuration représentée à la figure 2.

Suite au vissage complet de l'écrou 12 sur la vis 33, la polymérisation du polysulfure conduit au durcissement du mastic, au bout d'une durée par exemple comprise entre 20 minutes et 24 heures. L'étanchéité est alors assurée au niveau de l'assemblage système de fixation / structure.

La figure 3 représente un système de fixation 40 en cours de montage, selon un autre mode de réalisation de l'invention. Le système 40 de fixation est destiné à solidariser de manière étanche des éléments (31, 32) de structure, par exemple des panneaux d'avion en matériau composite.

Le système 40 de fixation comprend un ensemble 10A avec notamment une rondelle 11 et une bague de sertissage 12A, comme représenté à la figure 1C.

Le système 40 comprend une tige 33A comportant un fût lisse 41, une portion de blocage 42, une gorge de rupture 43, une queue de traction 44 qui prend place dans une douille 45 insérée avec jeu dans un alésage ménagé dans les panneaux (31, 32). Le procédé de montage du système 40, décrit ci-après, a pour objectif de réaliser une étanchéité entre le système 40 et la structure.

Le diamètre du fût lisse 41 du rivet est supérieur au diamètre intérieur de la douille 45. Le rivet 33A est inséré dans la douille 45, de sorte que la queue de traction 44 ressorte du panneau 32. Un outil -non représenté-agrippe la queue de traction 44 de la tige, et la tire pour insérer le fût lisse 41 dans la douille 45 jusqu'à ce que la tête de la tige entre en contact avec la douille. Un autre outil sertit alors la bague 12A sur la portion de blocage 42. Lors du sertissage, la matière de la bague est déplacée à la fois radialement vers l'intérieur, de manière à solidariser la bague 12A et la portion de blocage 42 de la tige, et axialement en direction du panneau 32, suite à la poussée de l'outil. La rondelle 12A ne tourne pas autour de la bague mais protège le panneau, lors de l'opération de sertissage de la bague, des efforts de déformation imprimés à la bague. Le mastic 21 est alors, comme précédemment décrit, chassé vers le centre de la base annulaire pour se loger dans l'interstice annulaire formé entre la base annulaire 15 de la rondelle, la bague 12A et la douille 45. Enfin, la queue de traction est cassée au niveau de la gorge de rupture 43, afin de finaliser l'assemblage.

Suite au sertissage de la bague 12A sur la tige 33A, la polymérisation du polysulfure conduit au durcissement du mastic, au bout d'une durée par exemple comprise entre 20 minutes et 24 heures. L'étanchéité est alors assurée au niveau de l'assemblage.

En variante non représentée, l'ensemble 10 ou 10A peut être utilisé avec une fixation comportant un fût lisse, un filetage, une gorge de rupture et une queue de traction, fixation par exemple décrite dans le brevet US6665922.

En variante non représentée, l'ensemble 10 rondelle / écrou peut aussi être utilisé avec une tige comportant un fût lisse, un filetage, une gorge de rupture, une queue de traction et une douille dans laquelle le fût de la tige est inséré en force, fixation par exemple décrite dans le brevet EP 1 903 221. Ainsi, le mastic frais est déplacé vers la douille lorsque l'écrou est vissé sur le filetage de la tige, jusqu'à former un cordon étanche autour de la douille.

En variante non représentée, l'ensemble 10 rondelle / écrou peut également être utilisé avec une vis et une douille, dans laquelle le fût de la vis est inséré en force, comme par exemple la vis décrite dans le document FR2946707. Ainsi, le mastic frais est déplacé vers la douille lorsque l'écrou est vissé sur le filetage de la vis, jusqu'à former un cordon étanche autour de la douille.

## Revendications

1. Ensemble (10, 10A) comprenant une fixation femelle (12, 12A) assemblée à une rondelle (11), ladite rondelle comprenant une base annulaire (15) et une jupe (13) sensiblement cylindrique solidaire d'une périphérie externe de la base annulaire, la base annulaire étant au moins partiellement revêtue d'une couche (21) de composition visqueuse, apte à former par polymérisation un revêtement étanche aux liquides, l'ensemble étant **caractérisé en ce que** la fixation femelle est un écrou (12), ou une bague de sertissage (12A), dont une embase (16) est logée dans une cavité de la rondelle (11) formée par la base annulaire (15) et la jupe (13) de ladite rondelle, et assemblé à la rondelle (11) par une surface proximale (22) de ladite embase par adhérence avec la couche (21) de composition visqueuse.

2. Ensemble (10, 10A) selon la revendication 1, tel que la jupe de la rondelle est munie de moyens (23) d'assemblage par emboîtement élastique avec la fixation femelle, lesdits moyens autorisant une rotation de la fixation femelle (12, 12A) par rapport à la rondelle (11).

3. Ensemble selon l'une des revendications 1 ou 2, tel que la composition visqueuse comprend un polysulfure liquide et un réactif apte à libérer de l'oxygène.

4. Ensemble selon la revendication 3, tel que le réactif apte à libérer de l'oxygène est le dioxyde de manganèse.

5. Ensemble selon la revendication 3 ou la revendication 4, tel que le polysulfure liquide et/ou le réactif apte à libérer de l'oxygène sont sous forme micro-encapsulée dans la composition visqueuse.

6. Ensemble selon la revendication 3 ou la revendication 4, tel que le polysulfure liquide et le réactif apte à libérer de l'oxygène sont sous forme de mélange dans la composition visqueuse.

7. Ensemble selon l'une des revendications précédentes tel que la base annulaire (15) de la rondelle est plane ou tronconique.

8. Ensemble selon l'une des revendications précédentes, tel que la base annulaire (15) de la rondelle forme avec la jupe (13) un angle supérieur ou égal à 90°.

9. Procédé de montage étanche d'un système de fixation, ledit système comprenant :
- un ensemble (10, 10A) selon l'une des revendications 1 à 8, ledit ensemble comprenant une fixation femelle (12, 12A) assemblée libre en rotation axiale sur une rondelle (11), une couche (21) de composition visqueuse étant positionnée entre une face proximale plane de la fixation femelle et la base annulaire (15) de la rondelle (11),
- une fixation mâle (33, 33A) munie d'une extrémité (35) apte à coopérer avec la fixation femelle,
ledit procédé comprenant les étapes suivantes :
- insertion d'une fixation mâle dans un alésage (34) d'éléments (31, 32) de structure à fixer ;
- pose de l'ensemble fixation femelle (12, 12A) / rondelle (11) sur la fixation mâle jusqu'à l'entrée en contact de la rondelle avec l'un des éléments de structure à fixer, de sorte à bloquer la rotation axiale de ladite rondelle par rapport audit élément de structure.
- installation de la fixation femelle sur la fixation mâle, son déplacement par rapport à la rondelle conduisant au fluage de la composition visqueuse vers l'axe (14) de la base annulaire, de sorte à combler des interstices (36) formés entre la fixation mâle, la fixation femelle et l'alésage ;
- après installation complète de la fixation femelle, durcissement de la composition visqueuse par polymérisation, de sorte à étanchéifier le système et les éléments de structure.

10. Procédé selon la revendication 9, tel que l'ensemble (10, 10A) est selon la revendication 5, le déplacement de la fixation femelle par rapport à la rondelle conduisant à la rupture des micro-capsules et au mélange du polysulfure liquide et du réactif apte à libérer de l'oxygène.

11. Procédé selon la revendication 9 ou la revendication 10, tel que :
- la base annulaire (15) de la rondelle (11) portant la couche de composition visqueuse est tronconique ;
- l'installation de la fixation femelle entraîne la compression de ladite base annulaire entre un élément de structure et la face proximale plane de la fixation femelle, ladite compression conduisant à l'aplanissement de ladite surface de la rondelle.

12. Procédé selon l'une des revendications 9 à 11, dans lequel la fixation mâle est une vis (33), une tige, une vis avec une douille ou une tige (33A) avec une douille (45).

## Patentansprüche

1. Einheit (10, 10A), umfassend ein Aufnahmebefestigungsteil (12, 12A), das mit einer Scheibe (11) verbunden ist, wobei die Scheibe eine ringförmige Basis (15) und eine im Wesentlichen zylindrische Schürze (13), die mit einer äußeren Peripherie der ringförmigen Basis verbunden ist, umfasst, wobei die ringförmige Basis zumindest teilweise mit einer Schicht (21) mit viskoser Zusammensetzung überzogen ist, die geeignet ist, durch Polymerisation einen gegen Flüssigkeiten dichten Überzug zu bilden, wobei die Einheit **dadurch gekennzeichnet ist, dass** das Aufnahmebefestigungsteil eine Mutter (12) oder eine Presshülse (12A) ist, deren Sockel (16) in einem Hohlraum der Scheibe (11) angeordnet ist, der von der ringförmigen Basis (15) und der Schürze (13) der Scheibe gebildet ist, und die mit der Scheibe (11) durch eine proximale Fläche (22) des Sockels durch Haftung mit der Schicht (21) mit viskoser Zusammensetzung verbunden ist.

2. Einheit (10, 10A) nach Anspruch 1, bei der die Schürze der Scheibe mit Mitteln (23) zur Verbindung mit dem Aufnahmebefestigungsteil durch elastisches Einstecken versehen ist, wobei die Mittel eine Drehung des Aufnahmebefestigungsteils (12, 12A) in Bezug zur Scheibe (11) gestatten.

3. Einheit nach einem der Ansprüche 1 oder 2, bei der die viskose Zusammensetzung ein flüssiges Polysulfid und ein Reagens umfasst, das geeignet ist, Sauerstoff freizusetzen.

4. Einheit nach Anspruch 3, bei der das Reagens, das geeignet ist, Sauerstoff freizusetzen, Mangandioxid ist.

5. Einheit nach Anspruch 3 oder Anspruch 4, bei der das flüssige Polysulfid und/oder das Reagens, das geeignet ist, Sauerstoff freizusetzen, in mikroverkapselter Form in der viskosen Zusammensetzung vorhanden sind.

6. Einheit nach Anspruch 3 oder Anspruch 4, bei der das flüssige Polysulfid und das Reagens, das geeignet ist, Sauerstoff freizusetzen, in Form eines Gemisches in der viskosen Zusammensetzung vorhanden sind.

7. Einheit nach einem der vorhergehenden Ansprüche, bei der die ringförmige Basis (15) der Scheibe eben oder kegelstumpfartig ist.

8. Einheit nach einem der vorhergehenden Ansprüche, bei der die ringförmige Basis (15) der Scheibe mit der Schürze (13) einen Winkel größer oder gleich 90° bildet.

9. Verfahren zur dichten Montage eines Befestigungssystems, wobei das System umfasst:
- eine Einheit (10, 10A) nach einem der Ansprüche 1 bis 8, wobei die Einheit ein Aufnahmebefestigungsteil (12, 12A) umfasst, das axial frei drehbar mit einer Scheibe (11) verbunden ist, wobei eine Schicht (21) mit viskoser Zusammensetzung zwischen einer ebenen proximalen Fläche des Aufnahmebefestigungsteils und der ringförmigen Basis (15) der Scheibe (11) angeordnet ist,
- ein Einsteckbefestigungsteil (33, 33A), das mit einem Ende (35) versehen ist, das geeignet ist, mit dem Aufnahmebefestigungsteil zusammenzuwirken,
wobei das Verfahren die folgenden Schritte umfasst:
- Einsetzen eines Einsteckbefestigungsteils in eine Bohrung (34) von zu befestigenden Strukturelementen (31, 32);
- Legen des Aufnahmebefestigungsteils (12, 12A) / der Scheibe (11) auf das Einsteckbefestigungsteil bis zur Kontaktnahme der Scheibe mit einem der zu befestigenden Strukturelemente, um die axiale Drehung der Scheibe in Bezug zum Strukturelement zu blockieren;
- Anordnen des Aufnahmebefestigungsteils auf dem Einsteckbefestigungsteil, wobei seine Verschiebung in Bezug zur Scheibe zu einem Kriechen der viskosen Zusammensetzung zur Achse (14) der ringförmigen Basis führt, um Zwischenräume (36), die zwischen dem Einsteckbefestigungsteil, dem Aufnahmebefestigungsteil und der Bohrung gebildet sind, zu schließen;
- nach dem vollständigen Einbau des Aufnahmebefestigungsteils Härten der viskosen Zusammensetzung durch Polymerisation, um das System und die Strukturelemente abzudichten.

10. Verfahren nach Anspruch 9, bei dem die Einheit (10, 10A) nach Anspruch 5 ausgeführt ist, wobei die Verschiebung des Aufnahmebefestigungsteils in Bezug zur Scheibe zum Bruch der Mikrokapseln und zum Mischen des flüssigen Polysulfids und des Reagens, das geeignet ist, Sauerstoff freizusetzen, führt.

11. Verfahren nach Anspruch 9 oder Anspruch 10, bei dem:
- die ringförmige Basis (15) der Scheibe (11), die die Schicht mit viskoser Zusammensetzung trägt, kegelstumpfartig ist;
- der Einbau des Aufnahmebefestigungsteils zur Kompression der ringförmigen Basis zwischen einem Strukturelement und der ebenen proximalen Fläche des Aufnahmebefestigungsteils führt, wobei die Kompression zur Abflachung der Oberfläche der Scheibe führt.

12. Verfahren nach einem der Ansprüche 9 bis 11, bei dem das Einsteckbefestigungsteil eine Schraube (33), eine Stange, eine Schraube mit einer Büchse oder eine Stange (33A) mit einer Büchse (45) ist.

## Claims

1. Assembly (10, 10A) comprising a female fastener (12, 12A) fitted to a washer (11), said washer comprising an annular base (15) and an essentially cylindrical skirt (13) secured to an external periphery of the annular base, the annular base being at least partially coated with a layer (21) of viscous composition which is able to form, by polymerization, a liquid-proof coating, the assembly being **characterized in that** the female fastener is a nut (12) or a crimping ring (12A) of which a base (16) is housed in a cavity of the washer (11) formed by the annular base (15) and the skirt (13) of said washer, and fitted to the washer (11) by a proximal surface (22) of said base by adhesion with the layer (21) of viscous composition.

2. Assembly (10, 10A) according to Claim 1, such that the skirt of the washer is provided with means (23) for fitting by elastic nesting with the female fastener, said means allowing the female fastener (12, 12A) to rotate with respect to the washer (11).

3. Assembly according to either of Claims 1 and 2, such that the viscous composition comprises a liquid polysulfide and an oxygen-releasing reagent.

4. Assembly according to Claim 3, such that the oxygen-releasing reagent is manganese dioxide.

5. Assembly according to Claim 3 or Claim 4, such that the liquid polysulfide and/or the oxygen-releasing reagent are in micro-encapsulated form in the viscous composition.

6. Assembly according to Claim 3 or Claim 4, such that the liquid polysulfide and the oxygen-releasing reagent are in the form of a mixture in the viscous composition.

7. Assembly according to one of the preceding claims, such that the annular base (15) of the washer is planar or frustoconical.

8. Assembly according to one of the preceding claims, such that the annular base (15) of the washer forms, with the skirt (13), an angle greater than or equal to 90°.

9. Method for leak-tight assembly of a fastener system, said system comprising:
- an assembly (10, 10A) according to one of Claims 1 to 8, said assembly comprising a female fastener (12, 12A) fitted so as to be free to rotate axially on a washer (11), a layer (21) of viscous composition being positioned between a planar proximal face of the female fastener and the annular base (15) of the washer (11),
- a male fastener (33, 33A) provided with an end (35) that is able to engage with the female fastener,
said method comprising the following steps:
- insertion of a male fastener into a bore (34) of structural elements (31, 32) to be fastened;
- placing the assembly of the female fastener (12, 12A) and the washer (11) on the male fastener until the washer comes into contact with one of the structural elements to be fastened, so as to prevent the axial rotation of said washer with respect to said structural element;
- installation of the female fastener on the male fastener, the movement of the former with respect to the washer causing the viscous composition to flow towards the axis (14) of the annular base so as to fill interstices (36) formed between the male fastener, the female fastener and the bore;
- after complete installation of the female fastener, curing of the viscous composition by polymerization so as to seal the system and the structural elements.

10. Method according to Claim 9, such that the assembly (10, 10A) is according to Claim 5, the movement of the female fastener with respect to the washer causing the micro-capsules to rupture, and the liquid polysulfide and the oxygen-releasing reagent to mix.

11. Method according to Claim 9 or Claim 10, such that:
- the annular base (15) of the washer (11) bearing the layer of viscous composition is frustoconical;
- the installation of the female fastener causes said annular base to be compressed between a structural element and the planar proximal face of the female fastener, said compression flattening said surface of the washer.

12. Method according to one of Claims 9 to 11, in which the male fastener is a screw (33), a shank, a screw with a bushing or a shank (33A) with a bushing (45).
